Europäisches Patentamt

European Patent Office

Office européen des brevets

(11) Veröffentlichungsnummer: **0 458 052 A1**

(12) **EUROPÄISCHE PATENTANMELDUNG**

(21) Anmeldenummer: 91105844.4

(22) Anmeldetag: 12.04.91

(51) Int. Cl.⁵: **H02P 7/628**

(30) Priorität: 23.05.90 DE 4016593

(43) Veröffentlichungstag der Anmeldung:
27.11.91 Patentblatt 91/48

(84) Benannte Vertragsstaaten:
CH DE GB IT LI

(71) Anmelder: **ROBERT BOSCH GmbH**
**Postfach 10 60 50**
**W-7000 Stuttgart 10(DE)**

(72) Erfinder: **Stäbler, Manfred-Wilhelm,**
**Dipl.-Ing.(FH)**
**Christophstrasse 45**
**W-7022 Leinfelden-Echterdingen 2(DE)**

(54) **Regeleinrichtung für einen Elektromotor.**

(57) Die Erfindung betrifft eine Codiervorrichtung (4) für eine standardmäßige Regeleinrichtung (3), mit deren Hilfe die Regeleinrichtung (3) an die Kenndaten eines Elektromotors, insbesondere für ein Elektrowerkzeug, anpaßbar ist. Die Vorrichtung enthält einen Codierstift, dessen Länge bzw. Durchmesser den Kenndaten des Elektromotors entspricht. Mit dem Codierstift wird an geeigneter Stelle der Regeleinrichtung (3) der entsprechende Wert für den Motorstrom (1) vorgegeben. Mit der Codierung wird bewirkt, daß der Motor (1) in seinem optimalen Arbeitspunkt arbeitet. Ein weiterer Codierstift ist für die Kenndaten der Batterie (8) eines batteriebetriebenen Elektrowerkzeuges vorgesehen, über den die Kenndaten der Batterie (8) eingebbar sind, damit einerseits keine Überlastung der Batterie (8) entsteht und andererseits eine Tiefentladung der Batterie (8) verhindert wird.

FIG. 1

Stand der Technik

Die Erfindung geht aus von einer Regeleinrichtung für einen Elektromotor nach der Gattung des Hauptanpruchs. Bei bekannten Elektrowerkzeugen wird der Anstieg des Stromes durch eine Regelungsschaltung auf einen maximalen Wert begrenzt, um den Antriebsmotor vor Schäden durch Überlastung zu schützen. Aus der DE-OS 36 12 193 ist eine Antriebsregelung mit Überlastschutz für einen Universalmotor bekannt, bei der nach Erreichen eines Ansprechpunktes für die Strombegrenzung die Drehzahl des Antriebsmotors abgesenkt wird. Der Benutzer des Elektrogerätes kann aufgrund der veränderten Motorgeräusche auf den Belastungszustand des Elektrowerkzeuges schließen. Für einen ungeübten Benutzer des Elektrowerkzeuges ist es jedoch schwierig, die veränderten Motorgeräusche zu erkennen und dann die tatsächliche Belastung des Motors richtig abzuschätzen. Weiterhin ist ungünstig, daß die Strombegrenzung für den Elektromotor auf einen maximalen Stromwert eingestellt ist, da der maximale Strom eine starke Erwärmung des Motors bewirkt. Auch ist ungünstig, daß die Drehzahl des Antriebsmotors bei Erreichen des Ansprechpunktes der Strombegrenzung mit einem relativ starken Drehzahleinbruch reagiert und dadurch das Arbeiten im optimalen Arbeitspunkt des Motors nicht gewährleistet ist.

Bei der Herstellung eines Elektrowerkzeuges muß für jeden Motortyp eine entsprechende Regeleinrichtung hergestellt werden, die auf die Grenzwerte des Motors abgestimmt ist. Dieses erfordert einen beträchtlichen Aufwand, der bei der Herstellung derartiger Elektrowerkzeuge relativ teuer ist.

Vorteile der Erfindung

Die erfindungsgemäße Regeleinrichtung mit den kennzeichnenden Merkmalen des Hauptanspruchs hat demgegenüber den Vorteil, daß für unterschiedliche Motortypen die gleiche Regeleinrichtung verwendbar ist, da die Regeleinrichtung durch einfache Mittel auf jeden Motortyp anpaßbar ist. Besonders vorteilhaft ist, daß die Anpassung der Regeleinrichtung die Betriebsparameter des Antriebsmotors durch eine Codiervorrichtung erfolgt, die auf die Kenndaten des Elektroantriebs abgestimmt ist. Dadurch ergibt sich in vorteilhafter Weise ein besonders einfacher Zusammenbau des Elektrowerkzeuges nach dem Prinzip des Baukastensystems. Die vorgefertigte Regeleinrichtung wird mit dem gewünschten Motortyp kombiniert und durch Hinzufügen der Codiervorrichtung ohne weitere Abgleicharbeiten an den Motortyp angepaßt.

Durch die in den Unteransprüchen aufgeführten Maßnahmen sind vorteilhafte Weiterbildungen und Verbesserungen der im Hauptanspruch angegebenen Regeleinrichtung möglich. Besonders vorteilhaft ist, daß als Kennwert für den Antriebsmotor des Elektrowerkzeuges die Leistungsaufnahme im optimalen Arbeitspunkt wählbar ist.

Eine besonders einfache Ausführung des Erfindungsgegenstandes ergibt sich, wenn durch die Codiervorrichtung die Stromaufnahme des Elektrowerkzeuges im optimalen Arbeitspunkt vorgegeben wird.

Für schwierige Fälle, in denen eine kurzzeitige Überbelastung des Elektrowerkzeuges erwünscht ist, ist als vorteilhaft anzusehen, wenn die Codiervorrichtung abschaltbar ist und die Einstellwerte für den Antriebsmotors manuell eingebbar sind.

Ein weiterer Vorteil ergibt sich, wenn eine Anzeigevorrichtung vorgesehen ist, auf der die Belastungsparameter ablesbar sind. Derartige Anzeigen sind sehr hilfreich für einen schonenden Betrieb des Elektrowerkzeuges.

Eine besonders vorteilhafte und einfache Lösung für die Codierung der Regeleinrichtung ergibt sich, wenn die Codiervorrichtung einen Codierstift aufweist, dessen Länge und/oder dessen Durchmesser ein Maß für den Kennwert des Antriebsmotors des Elektrowerkzeuges ist. Durch Einsetzen unterschiedlich lange bzw. dicke Codierstifte, die auf ein entsprechendes Schiebepotentiometer der Regeleinrichtung wirken, ist eine einfache und besonders kostengünstige Programmierung der Regeleinrichtung möglich.

Bei batteriebetriebenen Elektrowerkzeugen ist es wünschenswert, daß nicht nur das Elektrowerkzeug, sondern auch die Batterie im optimalen Arbeitspunkt betrieben wird. Besonders vorteilhaft ist die Verwendung eines zweiten Codierstiftes, der auf die Betriebsparameter der Batterie abgestimmt ist und auf einen entsprechenden Regeleingang der Regeleinrichtung wirkt.

Damit nicht bereits bei kurzzeitigen Grenzbelastungen die Strombegrenzung zum unerwünschten Zeitpunkt anspricht, wird der Regeleinrichtung in vorteilhafter Weise eine Zeitverzögerungsstufe nachgeschaltet, die das Zurücknehmen der Regelkennlinie für eine vorgegebene Zeitspanne verzögert.

Weitere Vorteile und Verbesserungen des Erfindungsgegenstandes sind der Beschreibung entnehmbar.

Zeichnung

Ein Ausführungsbeispiel der Erfindung ist in der Zeichnung dargestellt und in der nachfolgenden Beschreibung näher erläutert. Es zeigen Figur 1 ein Blockschaltbild, Figur 2 ein Ausführungsbeispiel, Figur 3 die Anordnung des Elektrowerkzeuges mit der Regeleinrichtung und der Codiereinrichtung im Schnitt und Figur 4 ein zweites Ausführungsbeispiel der Codiervorrichtung.

Beschreibung des Ausführungsbeispiels

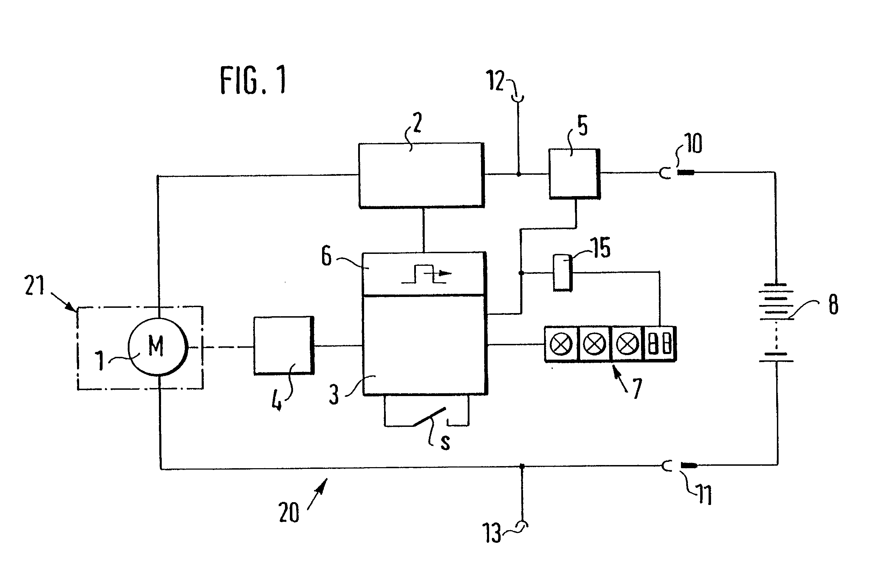

In Figur 1 ist anhand eines Blockschaltbildes der Stromlaufplan für den Antriebsmotor 1 eines Elektrowerkzeuges 21 dargestellt. Der Antriebsmotor 1 ist mit einem Leistungsschalter 2 verbunden, der über einen Stromsensor 5 mit der Spannungsklemme 10 verbunden ist. Der zweite Anschluß des Antriebsmotors 1 ist mit der Spannungsklemme 11 verbunden. Als Spannungsversorgung für die Klemmen 10, 11 ist je nach Motortyp eine Wechselspannung oder Gleichspannung vorgesehen. Im Ausführungsbeispiel gemäß der Figur 1 ist der Anschluß einer wiederaufladbaren Batterie (Akku) 8 vorgesehen.

Desweiteren ist eine Regeleinrichtung 3 vorgesehen, die mit einer Codiervorrichtung 4 verbunden ist. Die Regeleinrichtung 3 ist weiter mit dem Stromsensor 5, einer Zeitverzögerungsstufe 6 und einer Anzeigevorrichtung 7 verbunden. Dei Zeitverzögerungsstufe 6 ist mit dem Steuereingang des Leistungsschalters 2 verbunden. Desweiteren ist der Stromsensor 5 über einen Integrator 15 mit der Anzeigevorrichtung 7 verbunden. An die Anschlüsse 12, 13 ist ein Ladegerät anschließbar.

Die Regeleinrichtung 3 weist desweiteren einen Schalter s auf, der auf das Einstellpotentiometer 22 der Regeleinrichtung 3 wirkt und mit dem der durch den Codierstift 2 vorgegebene Einstellwert manuell ausschaltbar ist.

Die Anzeigevorrichtung 7 weist mehrere Anzeigen 12 bis 15 auf, mit denen die Betriebsparameter wie Überlast, optimaler Arbeitsstrom, Iststrom und Energiereserve darstellbar sind.

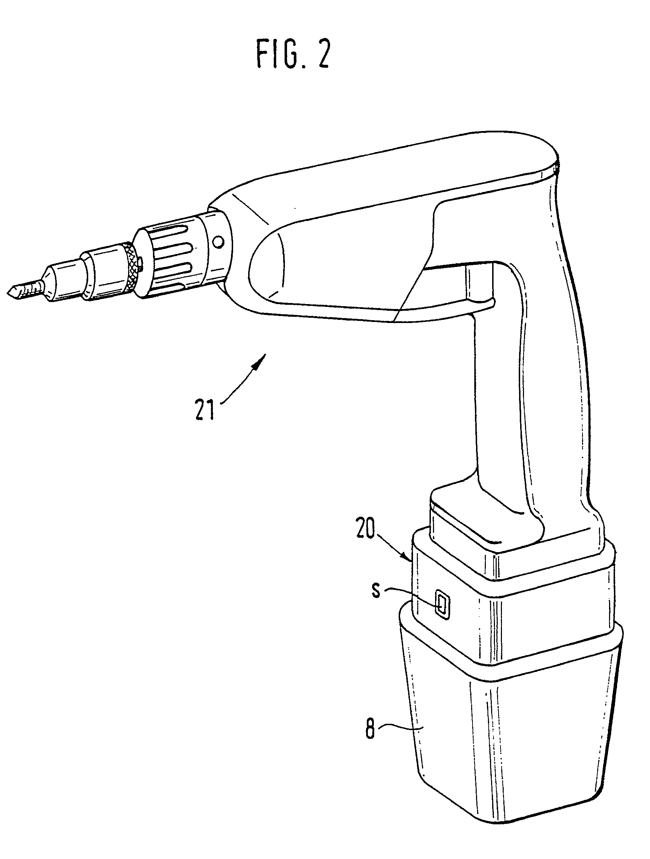

In Figur 2 ist ein erfindungsgemäßes Ausführungsbeispiel dargestellt, bei dem am unteren Griffende eines Elektrowerkzeuges 21 ein Elektronikteil 20 als Modul befestigt ist. An dieses Elektronikteil 20 ist die wiederaufladbare Batterie 8 modular angesteckt. Die Module sind über entsprechende elektrische Kontakte mit dem Elektrowerkzeug verbunden.

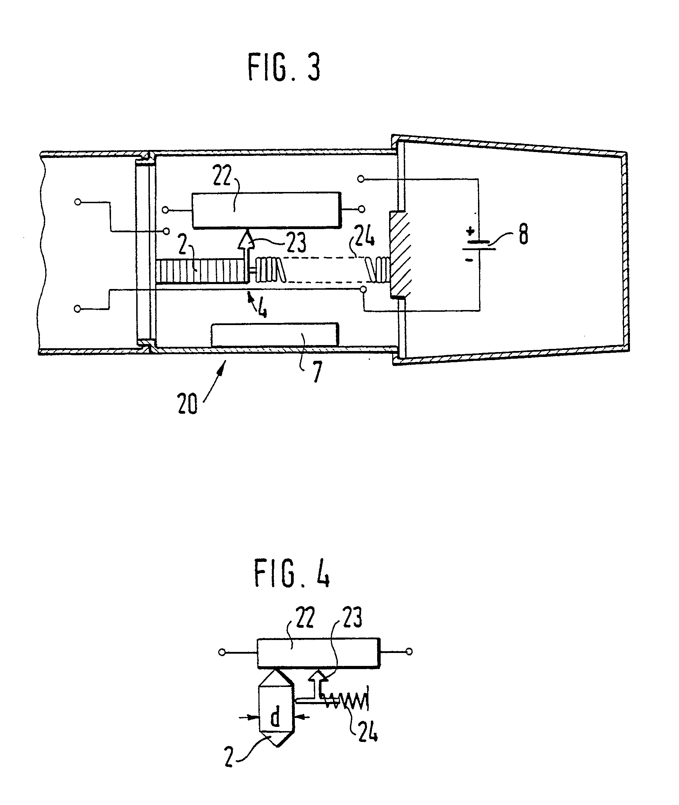

Figur 3 zeigt einen Schnitt durch das Elektronikteil 20. An einem einstellbaren Schiebepotentiometer 22 wird der Steller 23 über den Codierstift 2 verschoben und durch eine Druckfeder 24 fixiert. Desweiteren enthält der Elektronikteil 20 die Anzeigevorrichtung 7 und den Schalter s (Figur 2).

Im folgenden wird die Funktionsweise des Ausführungsbeispiels beschrieben. Die einzelnen Baugruppen wie Regeleinrichtung 3, Zeitverzögerungsstufe 6, Leistungsschalter 2, Stromsensor 5 und die Anzeigevorrichtung 7 sind bekannte Baugruppen, die zur Drehzahlregelung für einen Elektromotor verwendet werden. Eine derartige Regeleinrichtung ist beispielsweise aus der DE-PS 3733293 bekannt. Gemäß der Erfindung enthält die Regeleinrichtung 3 mindestens einen weiteren Eingang, auf den die Codiervorrichtung 4 wirkt. Als Codiervorrichtung 4 ist in einfachster Form ein Codierstift 2 vorgesehen, dessen Länge auf die Kenndaten des Antriebsmotors 1 abgestimmt ist. Prinzipiell sind beliebige Kenndaten des Motors 1 auf den Codierstift 2 übertragbar. Ein besonderer Vorteil der Erfindung besteht jedoch darin, daß der Codierstift 2 auf die Kenndaten, beispielsweise die Stromaufnahme für den optimalen Arbeitspunkt des Motors 1 abgestimmt ist. Als optimaler Arbeitspunkt des Motors 1 wird der günstigste Wirkungsgrad angenommen, bei dem bei größtmöglicher abgegebener Leistung die geringste Energieaufnahme bzw. Stromaufnahme erfolgt.

Um die als bekannt vorausgesetzte Regeleinrichtung 3 auf die Kenndaten eines beliebigen Antriebsmotors 1 abzustimmen, greift gemäß der Figur 3 der Codierstift 2 der Codiervorrichtung 4 über eine Aufnahme in der Regeleinrichtung 3 auf den Steller 23 eines gefederten Schiebepotentiometers 22, das dadurch die Regelcharakteristik der Regeleinrichtung 3 bestimmt. Je nach Länge und/oder Durchmesser des Codierstiftes 2 wird der Steller 23 des Schiebepotentiometers 22 verschoben und dadurch eine unterschiedliche Regelcharakteristik eingestellt.

In Figur 4 ist ein zweites Ausführungsbeispiel dargestellt, bei dem der Durchmesser des Codierstiftes 2 als Regelgröße abgetastet wird. Die Funktionsweise ist die gleiche wie bei dem Ausführungsbeispiel gemäß der Figur 3.

Bei weiterer Ausgestaltung der Erfindung sind als Codiermittel auch Scheiben, Schlüssel, Schalter, etc. verwendbar.

Aufgrund der eingestellten Regelcharakteristik bewirkt der Ausgang der Regeleinrichtung 3 über die Zeitverzögerungsstufe 6 auf einen Leistungsschalter 2, der beispielsweise als Halbleiter-Leistungsschalter ausgebildet ist. Der im Motorkreis fließende momentane Strom wird vom Stromsensor 5 erfaßt und als weitere Eingangsgröße in die Regeleinrichtung 3 eingegeben. Durch Vergleich des Iststromes mit dem vorgegebenen optimalen Sollstrom wird der Leistungsschalter 2 derart geregelt, daß der Antriebsmotor 1 stets in seinem optimalen Arbeitspunkt arbeitet.

Da der optimale Arbeitspunkt für den Antriebsmotor 1 einen Strom erfordert, der niedriger ist als der üblicherweise vorgegebene maximale Nennstrom in einem Temperaturbereich, arbeitet der Antriebsmotor 1 mit einer geringeren Eigenerwärmung, so daß seine Lebensdauererwartung verbessert ist.

Die Zeitverzögerungsstufe 6 bewirkt, daß eine vorgegebene Strombegrenzung nicht bei jeder kurzfristigen Überlastung des Elektrowerkzeuges 21 anspricht. Kurzzeitige Überlastungen sind für den Antriebsmotor 1 prinzipiell nicht schädlich, so daß ein Ansprechen der Stromabschaltung nur stören würde. Bei längerfristiger Überlastung treten jedoch starke Erwärmungen des Motors 1 auf, so daß dann zum Schutz des Antriebsmotors ein Abschalten erforderlich ist.

Zur Darstellung des Betriebszustandes des Antriebsmotors enthält die Anzeigevorrichtung 7 optische Anzeigen, die beispielsweise als Lampe, als Leuchtdiode oder als Display mit einem Flüssigkristall ausgebildet sind. In den Anzeigefeldern ist die Darstellung folgender Funktionen vorgesehen: Ansprechen der Strombegrenzung, optimaler Arbeitspunkt erreicht, sowie eine Anzeige über den Energieverbrauch bzw. die Energiereserve. Die letzten beiden Parameter sind wichtig für den Betrieb mit der wiederaufladbaren Batterie 8 und können erfaßt werden, wenn der Elektronikteil 20 sowohl beim Laden als auch beim Entladen mit der wiederaufladbaren Batterie 8 verbunden ist. Beim Laden bzw. Entladen erfaßt der Stromsensor 5 den Stromfluß in die bzw. aus der Batterie 8, so daß im Integrator 15 durch Integration des Stromes der aktuelle Ladezustand der Batterie 8 kontinuierlich ermittelt wird. Sowohl der Energieverbrauch als auch die Differenz zur verfügbaren Kapazität sind alternativ anzeigbar. Ein Anzeigefeld weist daher eine zweistellige Digitalanzeige auf, die die noch verfügbare Betriebsdauer der angeschlossenen Batterie 8 in Minuten anzeigt.

In weiterer Ausgestaltung der Erfindung ist vorgesehen, eines der Anzeigefelder als graphischen Balken auszubilden, dessen Länge ein Maß für die noch verfügbare Kapazität der Batterie entspricht.

Da es wünschenswert ist, nicht nur den optimalen Betrieb des Antriebsmotors 1, sondern auch den der wiederaufladbaren Batterie 8 zu überwachen, ist in weiterer Ausgestaltung der Erfindung eine weitere Codiervorrichtung 4 bzw. ein weiterer Codierstift 2 vorgesehen, der repräsentativ für die Kenndaten der Batterie 8 auf die Regeleinrichtung 3 einwirkt und beispielsweise den optimalen Entladestrom der Batterie 8 vorgibt. Der Codierstift 2 kann auch Informationen enthalten, durch die die Batterie 8 bei Erreichen einer Mindestspannung abgeschaltet wird.

**Patentansprüche**

1. Regeleinrichtung für einen Elektromotor, insbesondere für ein Elektrowerkzeug, mit einem in den Stromkreis des Elektromotors geschalteten Stromsensor und Leistungsschalter , wobei die Stromaufnahme bei Erreichen eines vorgegebenen Grenzwertes für das Elektrowerkzeug über den Leistungsschalter begrenzbar ist, dadurch gekennzeichnet, daß die Regeleinrichtung (3) mit einer Codiervorrichtung (4) verbunden ist, mit der wenigstens ein Einstellwert für die Regeleinrichtung (3) vorgebbar ist.

2. Regeleinrichtung nach Anspruch 1, dadurch gekennzeichnet, daß als Kennwert die Leistungsaufnahme im optimalen Arbeitspunkt des Elektromotors (1) wählbar ist.

3. Regeleinrichtung nach Anspruch 1, dadurch gekennzeichnet, daß als Kennwert die Stromaufnahme des Elektromotors (1) im optimalen Arbeitspunkt wählbar ist.

4. Regeleinrichtung nach einem der vorhergehenden Ansprüche, dadurch gekennzeichnet, daß die Codiervorrichtung (4) abschaltbar ist.

5. Regeleinrichtung nach einem der vorhergehenden Ansprüche, dadurch gekennzeichnet, daß der Kennwert des Elektromotors (1) manuell einstellbar ist.

6. Regeleinrichtung nach einem der vorhergehenden Ansprüche, dadurch gekennzeichnet, daß eine Anzeigeeinrichtung (7) vorgesehen ist, auf der mindestens einer der Parameter 'Ansprechen der Strombegrenzung', 'optimaler Arbeitspunkt erreicht', 'Überlast', 'Energieverbrauch', 'Energiereserve' ausgebbar ist.

7. Regeleinrichtung nach einem der vorhergehenden Ansprüche, dadurch gekennzeichnet, daß die Codiervorrichtung (4) ein Codiermittel aufweist.

8. Regeleinrichtung nach Anspruch 7, dadurch gekennzeichnet, daß das Codiermittel einen Codierstift aufweist, dessen Länge ein Maß für den Kennwert des Elektromotors (1) ist.

9. Regeleinrichtung nach einem der Ansprüche 7 oder 8, dadurch gekennzeichnet, daß das Codiermittel einen Codierstift aufweist, dessen Durchmesser ein Maß für den Kennwert des Elektromotors (1) ist.

10. Regeleinrichtung nach einem der vorhergehenden Ansprüche, dadurch gekennzeichnet, daß das Elektrowerkzeug zur Stromversorgung eine wiederaufladbare Batterie (8) aufweist und daß die Codiervorrichtung (4) ein Codiermittel aufweist, mit dem wenigstens ein Kennwert der wiederaufladbaren Batterie (8) für die Regeleinrichtung (3) vorgebbar ist.

11. Regeleinrichtung nach einem der vorhergehenden Ansprüche, dadurch gekennzeichnet, daß die Regeleinrichtung (3) eine Zeitverzögerungsstufe (6) aufweist, die nach Überschreiten des optimalen Arbeitspunktes des Elektromotors (1) das Abschalten des Leistungsschalters (2) für eine vorgegebene Zeitspanne verzögert.

FIG. 1

FIG. 1

# FIG. 2

FIG. 3

FIG. 4

**Europäisches Patentamt**

# EUROPÄISCHER RECHERCHENBERICHT

Nummer der Anmeldung

**EP 91 10 5844**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 304 574 (FESTO KG) <br> * Spalte 8, Zeile 45 - Spalte 9, Zeile 6; Spalte 10, Zeilen 1-7 * | 1,6,7 | H 02 P 7/628 |
| A | | 3 | |
| | — — — | | |
| X | EP-A-0 135 015 (ROBERT BOSCH GmbH) <br> * Seite 2, Zeilen 21-27; Ansprüche * | 1,5,7 | |
| Y | | 6,11 | |
| | — — — | | |
| A | DE-A-2 631 418 (METABOWERKE KG) <br> * Seite 5, Zeilen 15-25; Figur * | 1,5 | |
| | — — — | | |
| A | FR-A-2 519 208 (URANIT URAN-ISOTOPENTRENNUNGS-GmbH) <br> * Seite 6, Zeilen 18-35 * | 1,2 | |
| | — — — | | |
| Y | EP-A-0 256 937 (LA TELEMECANIQUE ELECTRIQUE) <br> * Spalte 4, Zeilen 56-62 * | 6 | |
| | — — — | | |
| Y | PATENT ABSTRACTS OF JAPAN, Band 6, Nr. 164 (E-127)[1042], 27. August 1982; <br> & JP-A-57 83 193 (HITACHI SEISAKUSHO K.K.) 24-05-1982 <br> * Das ganze Dokument * | 11 | RECHERCHIERTE SACHGEBIETE (Int. Cl.5) |
| | — — — — — | | H 02 P |

Der vorliegende Recherchenbericht wurde für alle Patentansprüche erstellt

| Recherchenort | Abschlußdatum der Recherche | Prüfer |
|---|---|---|
| Den Haag | 21 August 91 | BOURBON R.P.S. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument